# EUROPÄISCHE PATENTANMELDUNG

(11) **EP 2 886 246 A1**
(43) Veröffentlichungstag der Anmeldung: **24.06.2015**
(21) Anmeldenummer: 13290319.6
(22) Anmeldetag: 19.12.2013
(51) Int. Cl.: B23K 37/00, B23K 9/32, B23K 9/035, B23K 37/04

(54) **Fügevorrichtung**

(71) Anmelder: MAHLE Behr France Hambach S.A.S, 57910 Hambach (FR); MAHLE Behr GmbH & Co. KG, 70469 Stuttgart (DE)
(72) Erfinder: Kihn, Hubert, 57510 Hoste (FR); Reinhardt, Walter, DE - 71404 Korb (DE); Ludwig, Lars, DE - 73776 Altbach (DE)
(74) Vertreter: Grauel, Andreas

(57) **Zusammenfassung**

Die Erfindung betrifft eine Fügevorrichtung, insbesondere zum Herstellen eines Wärmeübertragers (26), mit einer Platte (25), die gegenüberliegend einer Außenseite (24) des Wärmeübertragers (26) anordenbar ist, wobei in der Platte (25) zumindest bereichsweise Öffnungen (32) vorgesehen sind. Außerdem betrifft die Erfindung ein Fügeverfahren zur Herstellung eines Wärmeübertragers (26) unter Verwendung der Fügevorrichtung (22).

## Beschreibung

### Technisches Gebiet

Die Erfindung betrifft eine Fügevorrichtung, insbesondere zur Durchführung eines Fügeprozesses bei der Herstellung eines Wärmeübertragers nach dem Oberbegriff von Anspruch 1. Außerdem betrifft die Erfindung ein Fügeverfahren.

### Stand der Technik

Ein Wärmeübertrager dient typischerweise der Abfuhr von Wärme aus oder von einer Wärmequelle, die mit dem Wärmeübertrager in direktem Kontakt steht. Hierbei weist der Wärmeübertrager in der Regel eine flächige Anbindung an den Wärmeübertrager auf. Insbesondere weist der Wärmeübertrager eine Anlagefläche auf, die bevorzugt eben ist.

Die DE 10 2010 050 555 A1 offenbart einen Wärmeübertrager mit mindestens einem Sammeltank und einer Kerneinheit. Die Kerneinheit umfasst mehrere Rohre und Rippen. Die Rohre erlauben es einem Fluid, dort hindurch zu strömen. Das Rohr ist gebildet, um eine flache Form derart aufzuweisen, dass eine Richtung von einem longitudinalen Durchmesser des Rohres mit einer Luftströmungsrichtung zusammenfällt. Die Rippen sind gebildet, um gewellt zu sein und sind mit flachen Oberflächen von den beiden Enden der Rohre verbunden.

Die DE 44 31 413 A1 betrifft einen Plattenwärmetauscher, der aus einem Stapel gleichförmiger Platten besteht, vorzugsweise aus Edelstahl, die gegenüber benachbarten Platten um 180° in ihrer Ebene gedreht sind und deren Wärmetauscherflächen Profilierungen aufweisen. Bei dem Verfahren zur Herstellung des Plattenwärmetauschers verhindern Lochungen im Bereich der sich berührenden Profilierungen zweier Platten, dass eine Blasenbildung auftritt. Die Lochungen können vor dem Schweißen nach einem vorgegebenen Muster eingestanzt werden. Alternativ können die Lochungen mit einem Laserstrahl eingebracht werden.

### Darstellung der Erfindung, Aufgabe, Lösung, Vorteile

Es ist die Aufgabe der Erfindung, eine verbesserte Fügevorrichtung, insbesondere zur Verwendung bei der Herstellung eines Wärmeübertragers, zu schaffen.

Dies wird mit einer Fügevorrichtung mit den Merkmalen von Anspruch 1 erreicht.

In einem Ausführungsbeispiel der Erfindung ist eine Fügevorrichtung insbesondere eingerichtet zum Ausführen eines Fügeprozesses bei der Herstellung eines Wärmeübertragers. Die Fügevorrichtung weist hierbei eine Platte auf, die gegenüberliegend einer Außenseite des Wärmeübertragers anordenbar ist. Die Platte der Fügevorrichtung weist Öffnungen auf. Aufgrund der Öffnungen können während des Fügeprozesses entstehende Rückstände oder Verunreinigungen durch prozessbedingte Medien reduziert werden. Prozessbedingte Medien können hierbei Materialien sein, die im Fügeprozess verwendet werden. Dies können Materialien sein, die zum Fügen und damit beispielsweise zur Herstellung einer Fügenaht verwendet werden, beispielsweise Klebermaterialien, Schweißmaterialien und/oder Lötmaterialien. Die Öffnungen weisen bevorzugt eine Größe auf, die derart gewählt ist, dass die Öffnungen nicht zugesetzt werden können. Das bedeutet, dass die Öffnungen bevorzugt größer als die Rückstände der Fügematerialien sind. Insbesondere sind die Öffnungen größer als Fügematerialrückstände. Die Öffnungen in der Platte können allesamt gleichgroß sein. Alternativ können unterschiedliche große Öffnungen in der Platte angeordnet sein.

Bevorzugt ist die Fügevorrichtung eingerichtet, einen thermischen Fügeprozess durchzuführen.

In einem Ausführungsbeispiel sind die Öffnungen durch eine gezielte Perforation einer Oberfläche der Platte der Fügevorrichtung realisiert. Eine Perforierung ist bevorzugt eine regelmäßige, insbesondere nach einem Muster geordnete Anordnung von Öffnungen. Die Öffnungen können hierbei Löcher sein. Die Perforierung ist zumindest im Bereich der Platte angeordnet, der der Außenseite des Wärmeübertragers während des Fügeprozesses gegenüberliegend angeordnet ist.

In einer alternativen Ausgestaltung der Fügevorrichtung sind die Öffnungen durch ein grobporiges Material realisiert. Das grobporige Material kann hierbei die komplette Platte umfassen oder einen Teilbereich der Platte.

Hierbei ist das Material der Platte zumindest bereichsweise ein offenporiges Material. Das offenporige Material kann hierbei Poren eines geeigneten Durchmessers aufweisen. Durch die Poren können die Öffnungen gebildet werden.

Die Aufgabe wird ferner mit einem Verfahren zur Herstellung eines Wärmeübertragers gelöst. Der Wärmeübertrager weist hierbei eine Außenseite auf. Das Verfahren gemäß der Erfindung weist den Schritt des Fügens auf, wobei die Fügevorrichtung gemäß der Erfindung verwendet wird. Das Fügeverfahren ist hierbei bevorzugt ein thermisches Fügeverfahren. Durch die Verwendung der Fügevorrichtung mit einer, Öffnungen aufweisenden, Platte können während des Fügeprozesses entstehende Verunreinigungen oder Rückstände so verteilt oder abtransportiert werden, dass keine oder zumindest weniger Rückstände als bei der Verwendung der im Stand der Technik bekannten Fügevorrichtung an der Außenseite des Wärmeübertragers haften bleiben. Hierdurch kann ein im Stand der Technik notwendiger Reinigungsschritt des Wärmeübertragers und/oder der Fügevorrichtung nach dem jeweiligen Fügeprozeß entfallen. Dies kann sowohl Zeit als auch Kosten bei der Herstellung des Wärmeübertragers einsparen. Insbesondere können die Reinigungsintervalle der Fügevorrichtung reduziert werden. Auch die, bei den im Stand der Technik verwendeten Fügeverfahren, notwendigen Nachbearbeitungskosten des Wärmeübertragers können entfallen.

Weitere vorteilhafte Ausgestaltungen sind durch die nachfolgende Figurenbeschreibung und durch die Unteransprüche beschrieben.

### Kurze Beschreibung der Figuren der Zeichnung

Nachstehend wird die Erfindung auf der Grundlage zumindest eines Ausführungsbeispiels anhand der Figuren der Zeichnung näher erläutert. Es zeigen in schematischer Darstellung:
- Fig. 1: eine Fügevorrichtung nach dem Stand der Technik,
- Fig. 2: eine Fügevorrichtung gemäß der Erfindung.

### Bevorzugte Ausführung der Erfindung

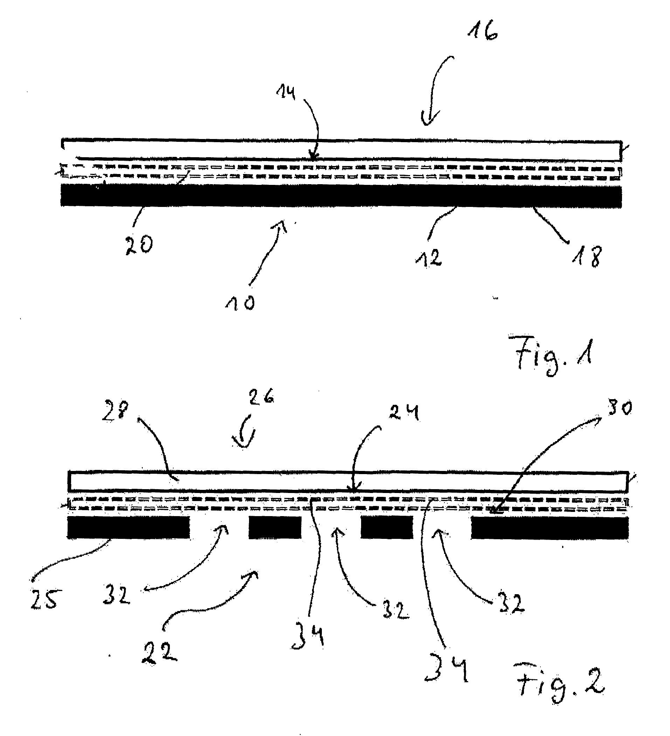

Die Figur 1 zeigt in schematischer Schnittdarstellung eine Fügevorrichtung 10 gemäß dem Stand der Technik, von der eine Platte 12 gezeigt ist. Die Fügevorrichtung 10 ist gegenüberliegend einer ebenen Außenseite 14 eines Wärmetauschers 16 angeordnet. Die Platte 12 weist zumindest eine planare, ebene und durchgehende Oberfläche 18 auf. Zwischen der Außenseite 14 des Wärmetauschers 16 sind Verunreinigungen 20 angeordnet, die durch einen thermischen Fügeprozess entstehen, wenn die Fügevorrichtung 10 den Fügeprozess durchgeführt hat.

Figur 2 zeigt eine Fügevorrichtung 22 gemäß der Erfindung. Die Fügevorrichtung 22 weist eine Platte 25 auf, die gegenüberliegend zu einer Außenseite 24 eines Wärmeübertragers 26 im Fügeprozess angeordnet ist. Von dem Wärmeübertrager 26 ist eine ebene Platte 28 mit der Außenseite 24 gezeigt. Die Fügevorrichtung 22 weist an der, der Außenseite 24 zugewandten Fügevorrichtungsseite 30 der Platte 25 Öffnungen 32 auf. Die Öffnungen 32 können durch eine Perforierung der Platte 25 entstanden sein. Alternativ können die Öffnungen 32 auch durch ein großporiges Material der Platte 25 erzeugt sein. Durch die Öffnungen 32 können Verunreinigungen 34 abtransportiert werden und können nicht an der Außenseite 24 des Wärmeübertragers 26 anhaften. Hierdurch kann ein Reinigungsprozess der Außenseite 24 des Wärmeübertragers 26 eingespart werden. Die Platte 25 muss ebenfalls nicht gereinigt werden, da auch hier kein Verunreinigungsmaterial anheften wird.

Die Platte 25 kann größer sein, als der dargestellte Ausschnitt, wobei die Öffnungen 32 in dem Bereich der Platte 25 angeordnet sind, in dem die Platte 25 an der Außenseite 24 des Wärmeübertragers 26 anliegt, insbesondere während des Fügeprozesses.

Das Fügeverfahren dient der Herstellung eines Wärmeübertragers mit einer Außenseite 24. Die Außenseite 24 ist bevorzugt eben und weist eine planare Oberfläche auf. Das Fügeverfahren umfasst den Schritt des thermischen Fügens, wobei die erfindungsgemäße Fügevorrichtung 22 mit Öffnungen 32 verwendet wird.

## Patentansprüche

1. Fügevorrichtung, insbesondere zum Herstellen eines Wärmeübertragers (26), mit einer Platte (25), die gegenüberliegend einer Außenseite (24) des Wärmeübertragers (26) anordenbar ist, wobei in der Platte (25) zumindest bereichsweise Öffnungen (32) vorgesehen sind.

2. Fügevorrichtung nach Anspruch 1, **dadurch gekennzeichnet, dass** die Fügevorrichtung (22) eingerichtet ist, einen thermischen Fügeprozess durchzuführen.

3. Fügevorrichtung nach einem der Ansprüche 1 oder 2, **dadurch gekennzeichnet, dass** die Öffnungen (32) durch gezielte Perforation einer Oberfläche der Platte (25) hergestellt sind.

4. Fügevorrichtung nach einem der Ansprüche 1 oder **2, dadurch gekennzeichnet, dass** die Öffnungen (32) durch ein grobporiges Material der Platte (25) realisiert sind.

5. Fügevorrichtung nach einem der vorhergehenden Ansprüche, **dadurch gekennzeichnet, dass** das Material der Platte (25) zumindest bereichsweise ein offenporiges Material ist.

6. Fügeverfahren zur Herstellung eines Wärmeübertragers (26) mit einer Außenseite (24), wobei das Verfahren den Schritt des thermischen Fügens umfasst, wobei eine Fügevorrichtung (10) gemäß einem der Ansprüche 1 bis 5 verwendet wird.
